# EUROPÄISCHE PATENTSCHRIFT

(11) **EP 0 936 983 B1**
(45) Veröffentlichungstag und Bekanntmachung des Hinweises auf die Patenterteilung: **11.02.2004**
(21) Anmeldenummer: 98945033.3
(22) Anmeldetag: 23.07.1998
(51) Int. Cl.: B60S 1/38, B29C 45/00

(54) **TRAGELEMENT FÜR EINE ZU EINEM WISCHBLATT FÜR SCHEIBEN VON KRAFTFAHRZEUGEN GEHÖRENDEN WISCHLEISTE UND VERFAHREN ZU DESSEN HERSTELLUNG**
SUPPORT ELEMENT FOR A WIPER BLADE FORMING PART OF A WIPER SQUEEGEE FOR MOTOR VEHICLE WINDSCREEN AND METHOD FOR MAKING SAME
ELEMENT DE SUPPORT DESTINE A UNE LAME D'ESSUIE-GLACE FAISANT PARTIE D'UNE RACLETTE D'ESSUIE-GLACE POUR PARE-BRISE DE VEHICULES AUTOMOBILES ET PROCEDE POUR SA FABRICATION

(30) Priorität: 02.09.1997 DE 19738232
(43) Veröffentlichungstag der Anmeldung: 25.08.1999
(73) Patentinhaber: ROBERT BOSCH GMBH, 70442 Stuttgart (DE)
(72) Erfinder: DE PAOLI, Albano, D-75417 Muehlacker (DE); JUST, Bernhard, D-71394 Kernen (DE); MERKEL, Wilfried, D-77876 Kappelrodeck (DE); SCHMIDT, Thomas, D-76530 Baden-Baden (DE); KOTLARSKI, Thomas, D-77830 Buehlertal (DE); BALD, Rolf, D-74206 Bad Wimpfen (DE); REISS, Juergen, D-85049 Ingolstadt (DE)
(86) Internationale Anmeldenummer: PCT/DE1998/002069
(87) Internationale Veröffentlichungsnummer: WO 1999/011495

(56) Entgegenhaltungen:
- FR-A- 2 181 101
- US-A- 3 925 844
- US-A- 4 790 992

## Beschreibung

Tragelemente der im Oberbegriff des Anspruchs 1 bezeichneten Art, die beispielsweise aus der FR-A-2 181 101 bekannt sind, sollen für eine möglichst gleichmäßige Verteilung des von einem mit dem Tragelement verbundenen Wischerarms ausgehenden Anpreßdruck an der Scheibe eines Kraftfahrzeugs gewährleisten. Durch eine entsprechende Krümmung des unbelasteten Tragelements - also wenn das Wischblatt von der Scheibe abgehoben ist - werden die Enden der im Betrieb des Wischblatts vollständig an der Scheibe angelegten Wischleiste durch das dann gespannte Tragelement zur Scheibe belastet, auch wenn sich die Krümmungsradien von sphärisch gekrümmten Fahrzeugscheiben bei jeder Wischblattposition ändern. Die Krümmung des Tragelements und damit des Wischblatts muß also etwas stärker sein als die im Wischfeld der zu wischenden Scheibe gemessene stärkste Krümmung. Das Tragelement ersetzt somit die aufwendige Tragbügelkonstruktion mit zwei in der Wischleiste angeordneten Federschienen, wie sie bei herkömmlichen Wischblättern praktiziert wird.

Die Erfindung geht aus von einem Tragelement nach der Gattung des Anspruchs 1, wie es aus der FR-A-2 181 101 bekannt ist. Ein weiteres bekanntes Tragelement dieser Art (FR-PS 21 91 510) ist aus einem Plastikmaterial, beispielsweise aus einem Polypropylen hergestellt. Es hat sich jedoch gezeigt, daß die Festigkeit und damit die Elastizität derartiger Tragelemente nur kurzzeitig den an diese gestellten Anforderungen genügen, weil der einsetzende Alterungsprozeß zu einer Versprödung und zu einem Kriechen des Materials führt. Insbesondere die stärker gekrümmten Scheibenbereiche können dann nicht mehr oder nur noch unzureichend gereinigt werden.

### Vorteile der Erfindung

Bei dem erfindungsgemäßen Tragelement mit den kennzeichnenden Merkmalen des Anspruchs 1 sorgen die dem Kunststoff beigemischten und in diesem eingebetteten Fasern für eine hohe, dauerhaft gleichbleibende Festigkeit und Elastizität des Kunststoffs. Gleichzeitig wird auch dessen Wärmestabilität verbessert. Eine besonders kostengünstige Ausgestaltung des Tragelements und damit des Wischblatts ergibt sich dadurch, daß an das Tragelement eine Anschlußvorrichtung für das freie Ende des Wischerarms angeformt ist, die für den Wischerarm zwei im Mittenabschnitt des Tragelements plazierte, parallel zu dessen Längserstreckung mit Abstand voneinander angeordnete Stützen aufweist, die über einen quer zur Längserstreckung des Tragelements ausgerichteten Anschlußzapfen miteinander verbunden sind.

Als besonders günstig hat es sich erwiesen, wenn dem Kunststoff Glasfasern oder andere Fasern beigemischt sind.

Unter Berücksichtigung der dem Ausformvorgang vorhergehende Arbeitsschritte zur Vorbereitung des Kunststoffs hat es sich als besonders günstig erwiesen, wenn die Fasern eine Länge zwischen 100 µ und 20 mm aufweisen.

Wenn die Fasern eine Länge zwischen 200 µ und 600 µ haben, ist eine besonders problemlose Füllung des Formwerkzeuges möglich, wobei die angestrebten, vorteilhaften Eigenschaften des Kunststoffmaterials noch voll zum Tragen kommen.

Zur weiteren Verbesserung der Wärmestabilität und Reduzierung des Kriechens ist es von Vorteil, wenn der faserverstärkte Kunststoff mit wenigstens einem mineralischen Füllstoff angereichert ist.

Zur Herstellung eines bekannten Tragelements wird häufig - beispielsweise im Hinblick auf eine rasche Arbeitstaktfolge - das Formwerkzeug mit mehreren Einspritzöffnungen versehen, durch welche es gleichzeitig mit dem Kunststoffmaterial gefüllt wird. Dies führt aber dort zu sogenannten "Nahtbildungen", wo das Material, von den verschiedenen Öffnungen kommend zusammenfließt. In dieser "Naht" ergibt sich eine Schwächung des Tragelements, das beim Wischvorgang - wegen der sich ändernden Scheibenradien - einer ununterbrochen wechselnden Formänderung unterworfen ist, was letztendlich zur Schädigung des Tragelements und damit zur Minderung der Wischqualität führen kann.

Zur Vermeidung solcher "Nahtbildungen" und der damit verbundenen Mängel wird zur Herstellung eines Kunststoff-Tragelements der noch formbare Kunststoff über eine einzige, im Mittelbereich des zu fertigenden Tragelements in die Form mündende Öffnung eingebracht und von dort aus zu den Enden des Tragelements gedrückt.

Wenn dem dazu verwendeten Kunststoffmaterial darüber hinaus Fasern bestimmter Länge beigemischt sind, richten die sich zumindest überwiegend in Flußrichtung des Materials aus, wodurch eine optimale Nutzung der Fasern im angestrebten Sinne erreicht wird. Diese vorteilhafte Längs-Ausrichtung der Fasern wird erreicht, weil bei der extrem schlanken Geometrie des Tragelements dieses praktisch aus einer ausgeprägten, eine sehr geringe Fließgeschwindigkeit aufweisenden Rauchschicht besteht während die darunter liegenden Schichten wesentlich schneller strömen, wodurch die Faser in der Polymermatrix die erwähnte Ausrichtung erfährt.

Zwar ist aus der EP-B-0 498 802 ein Tragelement bekannt, das unter Verwendung von Fasermaterial gefertigt wird. Dort sind die Fasern jedoch zu Bändern verarbeitet, welche nach dem Tränken mit einem Harz unter Verwendung einer Kernleiste in eine Form eingelegt und dann gepreßt werden. Diese Art der Tragelementherstellung ist aufwendig und damit teuer.

Bei einem Tragelement, welches zwei in seinem Mittenabschnitt plazierte, parallel zu seiner Längserstreckung mit Abstand voneinander angeordnete Stützen hat, die über einen quer zur Längserstreckung des Tragelements ausgerichteten Anschlußzapfen miteinander verbunden sind, wird unter Beibehaltung der schon genannten Vorteile eine besonders hohe Festigkeit des während des Wischbetriebs hoch beanspruchten Anschlußzapfens erreicht, wenn das faserverstärkte Kunststoffmaterial in der Achsrichtung des Anschlußzapfens des herzustellenden Tragelements in die Form eingebracht wird, so daß das faserverstärkte Kunststoffmaterial von dort aus über die Stützen zu den Enden des Tragelements gedrückt wird. Die im Anschlußzapfen befindlichen Fasern richten sich beim Füllen der Form aufgrund der schon erwähnten Rauchschicht und damit verbundenen Scherströmung in Achsrichtung des Anschlußzapfens aus, so daß eine wesentliche Verstärkung des Anschlußzapfens und dessen Übergänge in die Stützen erreicht wird.

Weitere, vorteilhafte Weiterbildungen und Ausgestaltungen der Erfindung sind in der nachfolgenden Beschreibung eines in der Zeichnung dargestellten Ausführungsbeispiels des Tragelements und eines Herstellungsverfahrens für das Tragelement angegeben.

### Zeichnung

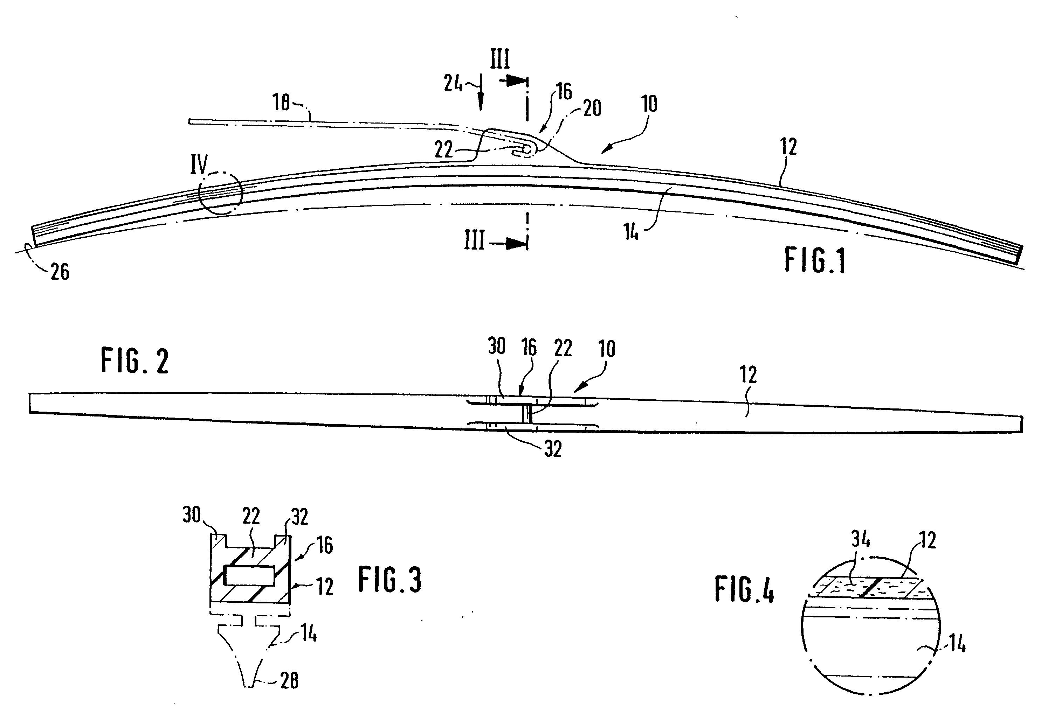

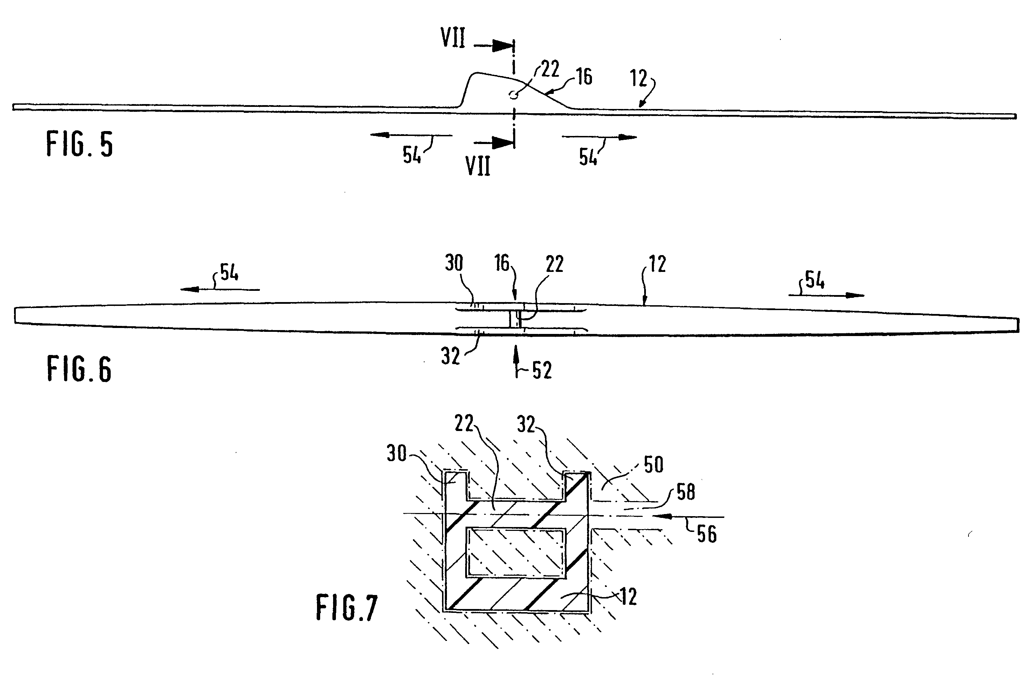

In der Zeichnung zeigen Figur 1 eine Seitenansicht eines Wischblatts mit einem erfindungsgemäßen Tragelement, Figur 2 eine Draufsicht auf das Wischblatt gemäß Figur 1, Figur 3 die Schnittfläche eines Schnitts durch das Tragelement und die Anschlußvorrichtung eines Wischblatts gemäß Figur 1, entlang der Linie III-III in vergrößerter Darstellung, Figur 4 eine in Figur 1 mit IV bezeichnete Einzelheit des Tragelements im Schnitt und vergrößert dargestellt, Figur 5 das Tragelement des Wischblatts gemäß Figur 1 gestreckt gezeichnet, Figur 6 eine Draufsicht auf das Tragelement gemäß Figur 5 und Figur 7 den Schnitt gemäß Figur 3 vergrößert gezeichnet und in einem Formwerkzeug angeordnet.

### Beschreibung des Ausführungsbeispiels

Ein in den Figuren 1 und 2 dargestelltes Wischblatt 10 weist ein bandartig langgestrecktes, federelastisches Tragelement 12 auf, an dessen Unterseite eine langgestreckte, gummielastische Wischleiste 14 längsachsenparallel befestigt ist. An der Oberseite des aus einem thermoplastischen Kunststoff gefertigten, auch als Federschiene zu bezeichnenden Tragelements ist in dessen Mittelabschnitt eine Anschlußvorrichtung 16 angeordnet, mit deren Hilfe das Wischblatt 10 mit einem angetriebenen Wischerarm 18 lösbar verbunden werden kann. Der Wischerarm 18 ist mit seinem einen, nicht dargestellten Ende an der Karosserie eines Kraftfahrzeuges geführt. An das freie Ende 20 des Wischerarms 18 ist ein als Gegenanschlußmittel dienender Haken angeformt, welcher einen zur Anschlußvorrichtung 16 des Wischblatts gehörenden Gelenkbolzen 22 umgreift. Die Sicherung zwischen dem Wischerarm 18 und dem Wischblatt 10 wird durch nicht näher dargestellte, an sich bekannte, als Adapter ausgebildete Sicherungsmittel übernommen. Der Wischerarm 18 und damit auch der Haken am Ende 20 ist in Richtung des Pfeiles 24 zur zu wischenden Scheibe belastet, deren zu wischende Oberfläche in Figur 1 durch eine strichpunktierte Linie 26 angedeutet ist. Da die strichpunktierte Linie 26 die stärkste Krümmung der Scheibenoberfläche darstellen soll, ist klar ersichtlich, daß die Krümmung des mit seinen beiden Enden an der Scheibe anliegenden Wischblatts stärker ist als die maximale Scheibenkrümmung. Unter dem Anpreßdruck (Pfeil 24) legt sich das Wischblatt mit seiner Wischlippe 28 über seine gesamte Länge an der Scheibenoberfläche 26 an. Dabei baut sich im federelastischen Tragelement 12 eine Spannung auf, welche für eine ordnungsgemäße Anlage der Wischleiste 14 bzw, deren Wischlippe 28 über die gesamte Länge der Wischleiste an der Scheibe sorgt.

Das gemäß der Erfindung ausgestaltete Tragelement 12 weist in seinem Mittelabschnitt zwei wangenartige Stützen 30 und 32 auf, welche parallel zur Längserstreckung des Tragelements 12 und mit Abstand voneinander angeordnet sind. Zwischen den beiden Stützen 30 ist mit Abstand vom eigentlichen Tragelement 12 der Gelenkbolzen 22 angeordnet, wie dies insbesondere aus Figur 3 ersichtlich ist. Beim dargestellten Ausführungsbeispiel greift das Ende 20 des Wischerarms 18 zwischen die beiden Stützen 30 und 32, wobei das hakenartig ausgebildete Ende des Wischerarms den Gelenkbolzen 22 umgreift (Figur 1). Das aus einem thermoplastischen Kunststoff bestehende Tragelement 12 wird zusammen mit den beiden Stützen und dem Gelenkbolzen 22 in einem einzigen Arbeitsgang in einer Gieß- oder Spritzform hergestellt. Zur dauerhaften Sicherung der eingangs schon erwähnten erforderlichen Eigenschaften des Tragelements sind dem Kunststoff Fasern beigemischt. Dabei kann es sich beispielsweise um Glasfasern, Kohlenstoffasern oder auch um Paramitfasern handeln. In bestimmten Fällen kann auch schon die Verwendung von Polyamidfasern oder Polyesterfasern genügen. Damit die mit den Fasern angereicherte Kunststoffmasse noch gut verarbeitbar ist, hat es sich als günstig erwiesen, wenn die Faserlänge nicht größer als 20 mm ist. Bei einer Verwendung von Fasern, deren Länge kleiner als 100 µ ist, wird die angestrebte und notwendige Dauerelastizität des Tragelements nicht mehr erreicht. Versuche haben gezeigt, daß bei einer Verwendung von Fasern mit einer Länge zwischen 200 µ und 600 µ ein problemloses Verarbeiten der Kunststoffmasse möglich ist und daß dabei auch die erforderlichen Kriterien hinsichtlich der Tragelement-Elastizität und Dauerfestigkeit erreicht werden. Zur Verbesserung der Wärmestabilität kann dem faserverstärkten Kunststoff darüber hinaus noch wenigstens ein mineralischer Füllstoff beigemischt werden. Dazu eignen sich besonders beispielsweise Kreide, Talkum, Silicate etc.

Wie insbesondere aus Figur 3 ersichtlich ist, ist die Wischleiste 14 (dort strichpunktiert gezeichnet), an der unteren, der zu wischenden Scheibe zugewandten Seite des bandartigen Tragelements 12 angeordnet. Die Verbindung bzw.

Befestigung der Wischleiste 14 am Tragelement 12 kann beispielsweise durch Haltekrallen erreicht werden, wie sie in der französischen Patentschrift 21 91 510 offenbart sind. Es ist jedoch aber auch denkbar, die Wischleiste an der Unterseite des Tragelements 12 anzukleben oder auf eine andere Art und Weise zu befestigen.

Die in Figur 4 dargestellte Einzelheit aus Figur 1 des Tragelements zeigt dieses in einem stark vergrößert dargestellten Teilschnitt, in dem die im Kunststoff eingebetteten Fasern 34 und deren Ausrichtung im Tragelement zeigt.

Das in den Figuren 5 und 6 dargestellte Tragelement 12 ist der Einfachheit halber gestreckt dargestellt, obwohl es - wie eingangs schon erwähnt - im unbelasteten Zustand stets die anhand von Figur 1 erläuterte Krümmung aufweisen muß. Figur 7 zeigt einen Schnitt entlang der Linie VII-VII in Figur 5, der im wesentlichen identisch ist mit der in Figur 3 dargestellten Schnittfläche durch das Tragelement 12. Die Schnittfläche gemäß Figur 7 ist gegenüber der Darstellung gemäß Figur 3 nochmals vergrößert worden. Weiter ist mit strichpunktierten Linien und einer strichpunktierten Schraffur das Prinzip einer Preß- oder Spritzform angedeutet, welche in geschlossenem Zustand dargestellt worden ist. Belange hinsichtlich der Entformbarkeit und die Anordnung der Trennfugen zwischen den Teilen der Spritzform sind bei der Darstellung außer Betracht gelassen worden. Die Figuren 5 bis 7 zeigen, wie die geschlossen dargestellte Spritzform 50 mit dem faserverstärkten Kunststoffmaterial gefüllt wird, so daß nach dem Öffnen der Form 50 das fertige Tragelement entnommen werden kann. Dies geschieht im Mittelabschnitt des Tragelements 12 (Pfeil 52) von wo aus das dort in die Form eintretende Kunststoffmaterial gemäß den weiteren Pfeilen 54 zu den Enden des Tragelements gedrückt wird, so daß nach dem Öffnen der Form 50 das fertige Tragelement entnommen werden kann. Das Befüllen der Spritzform 50 vom Mittelabschnitt des Tragelements 12 aus hat den Vorteil, daß das Tragelement ohne die schon erläuterte "Naht" hergestellt werden kann.

Wenn darüber hinaus das Tragelement 12 mit einer Anschlußvorrichtung 16 für den Wischerarm versehen ist, welche gemäß dem Ausführungsbeispiel zwei Stützen 30 und 32 für den Anschlußzapfen 22 hat die ihrerseits einstückig mit dem eigentlichen bandartig langgestreckten Tragelement verbunden sind, ist es besonders günstig, wenn das faserverstärkte Kunststoffmaterial in Achsrichtung (Pfeil 56) des Anschlußzapfens 22 des herzustellenden Tragelements 12 in die Form 50 eingebracht wird, so daß das faserverstärkte Kunststoffmaterial von dort aus über die Stützen 30, 32 zu den Enden des Tragelements 12 gedrückt wird (Pfeile 54). Das Kunststoffmaterial gelangt also über eine Füll- oder Einspritzöffnung 58 in die geschlossene Form 50 und füllt dort zunächst den für die Stütze 32 vorgesehenen Gießraum und wird dann weiter über die Gießräume für den Gelenkbolzen 22 und das Tragelement 12 zum Gießraum für die Stütze 30 gedrückt. Schließlich gelangt das fasergefüllte Kunststoffmaterial in Richtung der Pfeile 54 in den Formraum, der zu den Enden des Tragelements 12 führt. Durch die extrem schlanke Geometrie des Tragelements 12 besteht diese aus einer ausgeprägten Randschicht, in welcher sich beim Spritzvorgang durch die auftretende Scherung die Fasern 34 zumindest überwiegend in Flußrichtung (Pfeile 54) ausrichten, in welcher sie den Elastizitätsmodul in Hauptbiegerichtung des Tragelements optimieren. Im Bereich der Anschlußvorrichtung 16 liegen die Fasern (durch die Quer-Fließrichtung) nicht optimal zur Belastung, aber durch die größere Dicke der Stützen 30 und 32 und das damit höhere Trägheitsmoment wird die Belastbarkeit des Fügebereichs 12 ausreichend erhöht. Nach dem Öffnen der Form 50 kann das fertige Tragelement aus dieser entnommen werden.

## Patentansprüche

1. Tragelement (12) für eine zu einem Wischblatt (10) für Scheiben von Kraftfahrzeugen gehörenden Wischleiste (14), wobei das an dem freien Ende (20) eines angetriebenen Wischerarms (18) anschließbare Tragelement aus einem elastischen, faserverstärkten, thermoplastischen Kunststoff hergestellt ist, dem Fasern (34) beigemischt sind und wobei an das Tragelement (12) eine Anschlussvorrichtung (16) für das freie Ende des Wischerarms (18) angeformt ist, **dadurch gekennzeichnet, daß** das Tragelement bandartig langgestreckt ausgebildet und die bandartig langgestreckte, gummielastische Wischleiste (14) längsachsenparallel an dem Tragelement (12) befestigbar ist und dass die Anschlussvorrichtung (16) zwei im Mittenabschnitt, an der Oberseite des Tragelements (12) platzierte, parallel zu dessen Längserstreckung mit Abstand voneinander angeordnete Stützen (30, 32) hat, die über einen quer zur Längserstreckung des Tragelements ausgerichteten Anschlusszapfen (22) miteinander verbunden sind, der an die Stützen (30, 32) angeformt ist.

2. Tragelement nach Anspruch 1, **dadurch gekennzeichnet, dass** dem Kunststoff Glasfasern beigemischt sind.

3. Tragelement nach einem der Ansprüche 1 oder 2, **dadurch gekennzeichnet, dass** die Fasern (34) eine Länge zwischen 100 µ und 20 mm aufweisen.

4. Tragelement nach einem der Ansprüche 1 bis 3, **dadurch gekennzeichnet, dass** die Fasern eine Länge zwischen 200 µ und 600 µ aufweisen.

5. Tragelement nach einem der Ansprüche 1 bis 4, **dadurch gekennzeichnet, dass** der faserverstärkte Kunststoff mit wenigstens einem mineralischen Füllstoff angereichert ist.

6. Verfahren zur Herstellung eines Tragelements nach einem der Ansprüche 1 bis 5, wobei der Kunststoff über eine Füllöffnung in eine geschlossene Form (50) eingebracht wird, **dadurch gekennzeichnet, dass** das faserverstärkte Kunststoffmaterial in Achsrichtung des Anschlusszapfens (22) des herzustellenden Tragelements in die Form (50) eingebracht wird, so dass das faserverstärkte Kunststoffmaterial von dort aus über die Stützen (30, 32) zu den Enden des Tragelements gedrückt wird, und nach dem Öffnen der Form das fertige Tragelement entnommen werden kann.

## Claims

1. Supporting element (12) for a wiper strip (14) belonging to a wiper blade (10) for windows of motor vehicles, the supporting element, which can be connected to the free end (20) of a driven wiper arm (18), being produced from a flexible, fibre-reinforced thermoplastic to which fibres (34) are added, and a connecting device (16) for the free end of the wiper arm (18) being integrally formed on the supporting element (12), **characterized in that** the supporting element is of elongate design in the manner of a band and the rubber-elastic wiper strip (14) which is elongate in the manner of a band can be fastened to the supporting element (12) parallel to the longitudinal axis, and **in that** the connecting device (16) has two supports (30, 32) which are placed in the central section, on the upper side of the supporting element (12), are arranged at a distance from each other parallel to the longitudinal extent of said supporting element and are connected to each other via a connecting pin (22) which is orientated transversely with respect to the longitudinal extent of the supporting element and is integrally formed on the supports (30, 32).

2. Supporting element according to Claim 1, **characterized in that** glass fibres are added to the plastic.

3. Supporting element according to either of Claims 1 and 2, **characterized in that** the fibres (34) have a length of between 100 µ and 20 mm.

4. Supporting element according to one of Claims 1 to 3, **characterized in that** the fibres have a length of between 200 µ and 600 µ.

5. Supporting element according to one of Claims 1 to 4, **characterized in that** the fibre-reinforced plastic is enriched with at least one mineral filler.

6. Method for producing a supporting element according to one of Claims 1 to 5, the plastic being placed into a closed mould (50) via a filling opening, **characterized in that** the fibre-reinforced plastic material is placed into the mould (50) in the axial direction of the connecting pin (22) of the supporting element which is to be produced, so that the fibre-reinforced plastic material is pressed from there via the supports (30, 32) to the ends of the supporting element, and, after the mould is opened, the finished supporting element can be removed.

## Revendications

1. Elément de support (12) pour une lame d'essuyage (14) d'un balai d'essuie-glace (10) pour une vitre de véhicule automobile, l'élément de support qui se raccorde à l'extrémité libre (20) d'un bras d'essuie-glace (18) entraîné, est fabriqué en matière thermoplastique renforcée de fibres, matière à laquelle on a ajouté des fibres (34) et l'élément de support (12) comporte un dispositif de connexion (16) formé pour recevoir l'extrémité libre du bras d'essuie-glace (18),
**caractérisé en ce que**
l'élément de support (12) est de forme allongée en ruban et la lame d'essuyage (14) en caoutchouc, allongée en forme de ruban, est fixée à l'élément de support (12) parallèlement à son axe longitudinal et
le dispositif de connexion (16) se compose de deux appuis (30, 32) prévus dans le segment médian, sur le côté supérieur de l'élément de support (12) en étant parallèles à son extension longitudinale et avec un intervalle entre eux, ces éléments de support étant reliés par un axe de raccordement (22) aligné transversalement à la direction longitudinale de l'élément de support, cet axe étant formé avec les appuis (30, 32).

2. Elément de support selon la revendication 1,
**caractérisé en ce que**
les fibres de verre sont mélangées à la matière plastique.

3. Elément de support selon l'une des revendications 1 ou 2,
**caractérisé en ce que**
les fibres (34) ont une longueur comprise entre 100 µ et 20 mm.

4. Elément de support selon l'une des revendications 1 à 3,
**caractérisé en ce que**
les fibres (34) ont une longueur comprise entre 200 µ et 600 µ.

5. Elément de support selon l'une des revendications 1 à 4,
**caractérisé en ce que**
la matière plastique renforcée de fibres est enrichie d'au moins une charge minérale.

6. Procédé de fabrication d'un élément de support selon l'une des revendications 1 à 5, selon lequel on introduit de la matière plastique par un orifice de remplissage dans un moule fermé (50),
**caractérisé en ce que**
l'on introduit la matière plastique renforcée de fibres dans le moule (50) suivant la direction axiale de la broche de raccordement (22) de l'élément de support à réaliser pour que la matière plastique renforcée de fibres se répartisse à partir de ce niveau par les appuis (30, 32) vers les extrémités de l'élément de support en étant poussée vers ceux-ci et après ouverture du moule on peut en extraire l'élément de support terminé.
